Europäisches Patentamt

European Patent Office

Office européen des brevets

(19)

(11) **EP 1 580 163 A1**

(12) **EUROPEAN PATENT APPLICATION**
published in accordance with Art. 158(3) EPC

(43) Date of publication:
**28.09.2005 Bulletin 2005/39**

(51) Int Cl.⁷: **C01B 7/20**

(21) Application number: **03813731.1**

(22) Date of filing: **08.08.2003**

(86) International application number:
**PCT/RU2003/000359**

(87) International publication number:
**WO 2004/056700 (08.07.2004 Gazette 2004/28)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **20.12.2002 RU 2002134329**

(71) Applicant: **Zakrytoye Aktsionernoye Obschestvo
"Astor Electronics"
St. Petersburg, 197198 (RU)**

(72) Inventors:
• BARABANOV, Valery Georgiyevich
  192239 St.Petersburg (RU)
• KUZNETZOV, Andrey Sergeyevich
  197342 St.Petersburg (RU)
• LVOV, Viktor Alexeyevich
  665824 Angarsk (RU)
• MENSHOV, Vladimir Sergeyevich
  665824 Angarsk (RU)
• PETROV, Yury Alexeyevich
  198328 St.Petersburg (RU)
• RABINOVICH, Rostislav Leonidovich
  665824 Angarsk (RU)
• SAPOZHNIKOV, Mikhail Vasilyevich
  665824 Angarsk (RU)
• SHOPEN, Viktor Panteleymonovich
  665824 Angarsk (RU)

(74) Representative: **Atkinson, Peter Birch et al
MARKS & CLERK,
Sussex House,
83-85 Mosley Street
Manchester M2 3LG (GB)**

(54) **FLUORINE PRODUCTION METHOD**

(57)    The invention relates to fluorine production, in particular to methods for producing fluorine from, solid-phase metal fluorides and the complex salts thereof by thermal decomposition. Gaseous fluorine is used for many purposes such as the production of fluorine compounds by direct fluorination, for metal wielding, for producing protective films on metals during machining metals and alloys, etc and in the form of etching reagent for microelectronics. Manganese salts with a high fluorine content, i.e. manganese tetrafluoride $MnF_4$ and other salts, for example $K_3NiF_7$, $K_2NiF_7$, $K_2CuF_6$ and analogous compounds are used as initial compounds. The invention ensures a fluorine yield which is equal or higher than 99.0%. The inventive method is safe and easily used for production.

Fig. 1

**Description**

The invention pertains to the field of fluorine production, specifically methods for producing fluorine from solid metal fluorides or their complex salts by thermal decomposition.

Gaseous fluorine is used in many fields, like production of fluorine compounds by direct fluorination, in metal welding, to form protective films on metals or in the treatment of metal and alloy surfaces, etc., and also as an etching reagent in microelectronics.

The methods described in the present invention can be used in many areas, including those described above, where the use of pure fluorine is required.

Fluorine and other fluorine-containing gaseous compounds, like $NF_3$ or fluorine, are usually stored in gaseous form in cylinders under high pressure or in the form of cryogenic liquids at low temperatures.

Storage of fluorine or fluorine-containing gaseous compounds in gaseous form requires volumes that are tens of times greater than storage of liquids.

It is very convenient to have a possibility for simple and safe production of fluorine in the necessary volume and at the required location from compounds, whose transport does not pose special problems. Similarly, storage of fluorine or fluorine compounds at ambient temperature and pressure, incorporated in a solid matrix, or bonded in some other solid form, has an advantage in terms of safety and storage efficiency.

A pure fluorine generator is known (4,711,680, US C1. 149/109.4, published December 8, 1987), in which fluorine is produced from a granulated solid composition, which represents a thermodynamically unstable fluoride of a transition metal and a stable anion. Fluorine is formed as a result of a substitution reaction of a strong Lewis acid, accompanied by rapid irreversible decomposition of the unstable transition metal fluoride to a stable lower fluoride and elemental fluorine at high pressure. The fluorine generator with solid granules includes a stable salt, containing an anion, originating from the thermodynamically unstable transition metal fluoride with a high degree of oxidation, and a Lewis acid, which is stronger than this transition metal fluoride. This acid is a solid at ambient temperature, but melts or sublimes at elevated temperature. The cation of this stable salt contains an anion originating from a thermodynamically unstable transition metal fluoride with a high degree of oxidation, chosen from the group consisting of alkali or alkaline earth metals. The reaction occurs as follows:

$$A_2MF_6 + 2Y \rightarrow 2AYF + [MF_4]$$

Since the free metal fluoride $MF_4$ is thermodynamically unstable, it spontaneously decomposes to $MF_2$ and $F_2$ according to an irreversible reaction that permits generation of fluorine under high pressure without secondary reactions:

$$[MF_4] \rightarrow MF_2 + F_2$$

The following compositions [are used] as compounds $A_2MF_6$: $K_2NiF_6$, $K_2CuF_6$, $Cs_2CuF_6$. The method uses fluorides of alkali metals [sic: transition metals], for example, nickel, which adsorbs fluorine to form complex nickel and alkali metal salts - $Cs_2MnF_6$, $K_2NiF_6$; and $BiF_5$, $BiF_4$, $TiF_4$, etc. are used as compound Y.

The closest solution is a method for producing and storing pure fluorine (US Patent 3989808. US Cl. 423/503; 423/500; 423/504; Int. Cl: C01B 007/20, published November 2, 1976). The method uses fluorides of alkali metals and nickel, which adsorb fluorine to form complex nickel salts. After filling the generator with solid, the gaseous impurities are pumped out. The complex nickel fluoride is then heated and gaseous fluorine with a high degree of purity is released. However, the method does not permit fluorine production with a constant rate of gas generation.

The task facing the developers of the invention was to devise a method for producing gaseous fluorine with complete extraction from metal fluorides with a high degree of oxidation, with the possibility of producing gas at constant pressure. The method must be simple and safe to use. The degree of fluorine extraction should be no less than 99%.

The essence of the invention consists of the fact that the method for fluorine production is run by heating solid binary or complex metal fluorides with a high degree of oxidation to a temperature of 150 - 400°C, which are used in granulated or pelletized form, in which case the size of the granules (pellets) is from 1.0 to 3.0 mm. Their heating is ensured with a temperature drop in the bed, not exceeding 15°C, at a temperature below the melting point of the starting substances.

Manganese salts with a high fluorine content, potassium salts (hexafluoronickelate) $K_2NiF_6$, manganese tetrafluoride $MnF_4$ and other salts, for example, $K_3NiF_7$, $K_2CuF_6$ and similar compounds, are used as starting compounds. The particle size is chosen, so that the presence of a certain free space is ensured for optimal heating and withdrawal of the generated gaseous fluorine. It was found that the particle size should be in the range 1.0-3.0 mm, and this is

**EP 1 580 163 A1**

achieved by screening the starting compounds on sieves with a specified hole dimension. Limitation of the temperature drop in the bed of starting substances to a range of no more than 15°C is necessary to ensure uniform heating and uniform, controllable fluorine generation, in which case the smaller this interval, the more favorable the gas production conditions. It is practically impossible with ordinary methods to accomplish instantaneous heating of the bed without temperature differences at different points. Achievement of a minimal difference is possible, both by reducing the thickness of the bed and by selection of the heat supply method.

The reactor vessel, which represents an insulated vessel (cylindrical vessel) with the capability of uniform heating, and having a means to remove the formed gaseous fluorine, with a temperature regulator, is filled with the granulated substance and heating is started, monitoring the temperature with thermocouples. During heating, generation of pure fluorine occurs, which is taken off from the generating device and sent to use.

The reactor vessel and the parts in contact with gaseous fluorine are made of a material resistant to the effect of fluorine under the given conditions, for example, nickel or special alloys.

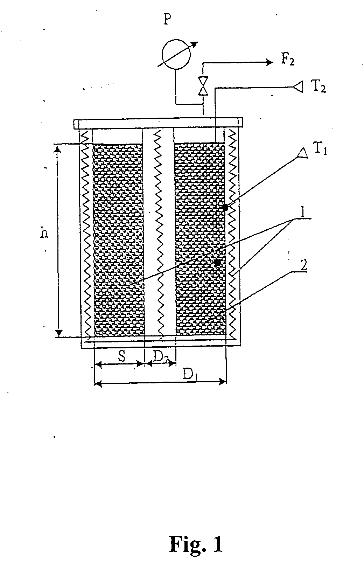

The conditions for specific accomplishment of the method are shown in the presented examples. The figure shows a general diagram of the apparatus for conducting the method. In one of its versions, it has the parameters:

Height h = 500 mm,
Inside diameter $D_1$ = 90 mm;
Diameter of inside heating device $D_2$ = 20 mm;

Width of the slot, which, in the present case, equals a thickness of the bed S, = 35 mm.

The apparatus is equipped with an electric heater 2 (external and internal), devices for temperature measurement ($T_1$ and $T_2$) and pressure measurement (P); fluorine is taken off along a line denoted $F_2$ in the diagram.

EXAMPLES OF THE METHOD

Example 1.

3600 g ($G_1$) of the salt $K_2NiF_6$ is charged to the annular space of the apparatus depicted in the figure in the form of granules measuring 3.0 mm (which were isolated beforehand by fractionation on sieves). The apparatus is closed and evacuated to a residual pressure of 0.1 mmHg, whereupon it is heated with heaters 2 to a temperature $T_1$, below the melting point of the salt. On reaching a fluorine pressure on the pressure meter P, equal to 0.1 MPa, takeoff of gaseous fluorine is started. The temperature of the bed is monitored, which is measured as $T_2$ and differs from $T_1$ by no more than 15°C, i.e.,

$$T_2 \leq T_1 = 15°C.$$

The process is considered completed, when the pressure P = 0.1 MPa is lower than the assigned value by 25%. Heating is disengaged, the apparatus cooled, the spent material discharged and weighed. The weight of the spent material ($G_2$) is 3160 g. The weight of the obtained fluorine is determined according to the weight difference:

$$G_F = (M_{F_2} \, G_{T_1}) : M_{K_2NiF_6} = 545 \text{ g}$$

Example 2

3770 g ($G_1$) of the salt $K_2NiF_6$ is charged to the annular space of the apparatus depicted in the figure in the form granules measuring 1.0 mm (which were first isolated by fractionation on sieves). The apparatus is closed and evacuated to a residual pressure of 0.1 mmHg, whereupon it is heated with heaters 2 to a temperature $T_1$ equal to 290°C. On reaching a fluorine pressure on the pressure meter P equal to 0.005 MPa, takeoff of gaseous fluorine is started. The temperature of the bed is monitored, which is measured as $T_2$ and amounts to 3°C, i.e.,

$T_2 = T_1 - 3°C$. After a pressure reduction to 0.005 MPa is reached, heating is disconnected, the apparatus cooled and the discharged material weighed. According to calculations, its weight was 567 g, i.e., the degree of fluorine extraction was 99.1%.

Examples 3-7 were conducted in the same apparatus with the same method, using the following compounds of different dispersity as starting compounds. The results are shown in the table.

Thus, the distinguishing features of the present invention are:

- smaller temperature range of the method;
- use of starting substances with determination of the size of the granules, which permits maximum utilization of the surface of the substances that generate the end product;
- production of fluorine at constant pressure;
- maintenance of a specific temperature drop in the bed, which permits avoidance of near-wall overheating of the product and, as a result of this, its sintering, which would lead to a reduction in yield.

Table

| Examples of the method for fluorine production | | | | | | | |
|---|---|---|---|---|---|---|---|
| Parameters | Starting substance | | | | | | |
| | $K_2NiF_6$ | | | $MnF_4$ | | $K_2CuF_6$ | |
| | Example no. | | | | | | |
| | 1 | 2 | 3 | 4 | 5 | 6 | 7 |
| Charge, g | 3600 | 3770 | 2507 | 3300 | 3300 | 2555 | 2555 |
| Temperature, °C | 400 | 290 | 300 | 200 | 350 | 150 | 200 |
| Particle size | 3.0 | 1.0 | 2.0 | 2.0 | 3.0 | 1.0 | 3.0 |
| Temperature drop in bed, °C | 15 | 3 | 7 | 1 | 8 | 1 | 10 |
| Amount of generated fluorine, g | 545 | 565 | 545 | 565 | 564 | 525 | 524.5 |
| % generated fluorine | 99 | 99.2 | | 99.4 | 99.35 | 99.3 | 99.25 |
| Pressure of generated fluorine, MPa | 0.1 | 0.005 | 0.007 | 0.05 | 1.0 | 0.05 | 0.1 |

**Claims**

1. Method for fluorine production from metal fluorides with a high degree of oxidation, comprising heating to a temperature below the melting point, **characterized by** the fact that granulated and pelletized transition metal fluorides or their complex compounds are heated to a temperature of 150-400°C, in which granules measuring 1.0 - 3.0 mm are used, and a temperature drop in the bed of starting substances of no more than 15°C is maintained.

**Fig. 1**

## INTERNATIONAL SEARCH REPORT

| International application No. |
|---|
| PCT/RU 03/00359 |

**A.    CLASSIFICATION OF SUBJECT MATTER**

C01B 7/20

According to International Patent Classification (IPC) or to both national classification and IPC

**B.    FIELDS SEARCHED**

Minimum documentation searched (classification system followed by classification symbols)

C01B 7/20, 7/19

Documentation searched other than minimum documentation to the extent that such documents are included in the fields searched

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | US 3989808 A (THE UNITED STATES OF AMERICA AS REPRESENTED BY THE UNITED STATES ENERGY RESEARCH AND DEVELOPMENT ADMINISTRATION) Nov. 2, 1976 | 1 |
| A | SU 1432001 A (MOSKOVSKY KHIMIKO-TEKHNOLOGICHESKY INSTITUT IM. D.I. MENDELEEVA) 23. 10. 1988 | 1 |
| A | DE 1904391 A (ELEKTROKEMISK A/S) 18. 09. 1969 | 1 |

☐   Further documents are listed in the continuation of Box C.        ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| (03. 11. 2003) | (13. 11. 2003) |

| Name and mailing address of the ISA/<br><br>**RU**<br><br>Facsimile No. | Authorized officer<br><br><br>Telephone No. |
|---|---|

Form PCT/ISA/210 (second sheet) (July 1992)